# EUROPEAN PATENT APPLICATION

(11) **EP 4 663 494 A1**
(43) Date of publication of application: **17.12.2025**
(21) Application number: 24182274.1
(22) Date of filing: 14.06.2024
(51) Int. Cl.: B60T 17/00, B01D 53/04

(54) **AIR DRYER CARTRIDGE WITH AN IMPROVED COVER ASSEMBLY**

(71) Applicant: KB Intellectual Property GmbH & Co. KG, 82049 Pullach (DE)
(72) Inventor: TOTH, Zoltan Laszlo, 6100 Kiskunfélegyháza (HU); OLAH, Tibor, 6000 Kecskemét (HU); TORMÁSI, Zoltán, 6000 Kecskemét (HU)

(57) **Abstract**

The present invention refers to an air dryer cartridge (100) for an air treatment device of a vehicle, especially a utility vehicle, wherein the air dryer cartridge (100) comprises a container (104) and a cover assembly (106), wherein the container (104) is configured to be mounted onto the air treatment device and includes a desiccant material (105), wherein the cover assembly (106) is configured to cover the container (104) and apply a tension to the desiccant material within the container (104), wherein the cover assembly (106) comprises a compression spring (108) and an outer cover element (110), wherein the outer cover element (110) is configured for secure attachment to the container, wherein the air dryer cartridge, in particular the outer cover element (110), comprises a first supporting element (112) configured for guiding and/or supporting the compression spring (108).Further, the present invention refers to an air treatment device for a vehicle, especially a utility vehicle, comprising an air dryer cartridge (100, 200) as outlined.

## Description

The present invention relates to an air dryer cartridge for vehicles, especially utility vehicles. In particular, the present invention relates to an air dryer cartridge comprising a cover assembly configured to enhance the support and guidance of guidance of a spring-loaded mechanism enclosed in the air dryer cartridge.

Further, the present invention relates to an air treatment device for vehicles, especially utility vehicles, comprising an air dryer cartridge including an improve cover assembly.

Pneumatic systems are commonly employed for brakes, suspension, and other auxiliary functions in vehicles, especially utility or commercial vehicles. The distribution of air within these systems is typically managed by a multi-circuit protection valve, which is designed to divide the compressed air from a compressor and regulate various circuit pressures and limitations. The compressed air undergoes a drying process to remove moisture and oil contaminations before entering the pneumatic systems. The drying process is achieved through the utilization of an air dryer cartridge positioned between the compressor and the multi-circuit protection valve, delivering dried and purified (oil-free) air to the valve for seamless operation.

Conventional air dryer cartridge may include a spring-loaded mechanism for maintaining pressure on a desiccant (desiccant material or filter element). This ensures proper sealing and contact for effective filtration and moisture absorption. A spring is typically installed within a cartridge housing, either directly against the desiccant material or disposed between a desiccant cover and a spring cover. In existing cartridge designs, the spring-loaded mechanism is only partly supported at one side through the desiccator cover. This design configuration tends to be unstable (fragile), resulting in the displacement of the spring and desiccator. Particularly, conventional cartridges therefore suffer from potential wear and friction of the desiccant material over time due to constant vibrations, poor design features and inadequate structural support for the spring-loaded mechanism. These factors lead to abrasion and deterioration of the airy dryer cartridge.

In addition, the presence of weak fastening mechanism for attaching the cartridge to a carrier presents an additional disadvantage when dealing with conventional air dryer cartridges. The carrier typically refers to a component for securely holding the cartridge and providing a connecting surface for attachment to the pneumatic system, such as an air treatment device. Specifically, the use of connections such as snap-in connections for attaching the air dryer cartridge, i.e. the spring cover, to the carrier is susceptible to accidental disengagement and breakage. This may cause leakage, operational disruptions and maintenance issues within the pneumatic system of vehicles. To protect such week connections usually an additional fastener, such as a plastic strap or a plastic band, has to be used for wrapping or encircling the cartridge attached to the carrier. This implies the need for additional components and materials in order to protect the air dyer cartridge, which is not optimal.

It is an object of the invention to enhance the performance of an air dryer cartridge by improving the support and guidance of the spring-loaded mechanism of the cartridge, and ensuring secure connections to the carrier. This further provides safer storage, transportation and handling of the air dryer cartridge.

These objectives are resolved by an air cartridge dryer according to claim 1 and by an air treatment device for a vehicle independent claim 15. Preferred embodiments are addressed by the dependent claims respectively.

According to the present invention an air dryer cartridge is provided, in particular, for an air treatment device of a vehicle, especially a utility vehicle, wherein the air dryer cartridge comprises a container and a cover assembly, wherein the container is configured to be mounted onto (i.e. in particular meaning securely attached to) an air treatment device and wherein the container includes a desiccant material, wherein the cover assembly is configured to cover the container and apply a predetermined tension to the desiccant material within the container, wherein the cover assembly comprises a compression spring and an outer cover element, wherein the outer cover element is configured for secure attachment to the container, wherein the air dryer cartridge, in particular outer cover element, comprises a (first) supporting element configured for guiding (supporting) the compression spring.

The present invention is based on the idea to provide an air dryer cartridge with an enhanced design features and structural supports. In particular, the air dryer cartridge of the present invention comprises a more robust connections and offers a better support, positioning and guidance for the compression spring throughout the lifespan of the air dryer cartridge. This advantageously prevents the breakage of connections and the displacement (or tilting) of the desiccant cover against the spring throughout during operation or handling. The improved design for a more stable (better secured) and effectively guided spring causes better load (stress) distribution at connection areas (points) within the air dryer cartridge, e.g. between the spring cover and the desiccant container and/or between the desiccant cover and the carrier. This, in turn, avoids creeping, deformation, or breakage, and mitigates localized stress peaks in the connection areas.

The first supporting element may comprise any suitable element included in the air dryer cartridge for guiding the compression spring (e.g. a spring element, a retainer element or a spring clamp or a bracket).

In particular, the first supporting element may comprise integrally formed depression or anchoring surface that ensures a secure contact with the spring, thereby supporting and/or guiding the positioning of the spring within the cover assembly is also envisaged.

For example, the first supporting element comprises a grooved surface that is, for example, defined between two protrusion elements formed on the outer cover element.

Advantageously, the cover assembly is designed to endure and distribute the mechanical loads resulting from applies forces and or momentum, e.g. tension, strain or stress that are generated during compression and acting on the inner and outer cover elements, thereby maintaining the structural integrity and operational efficiency of the spring-load mechanism throughout the lifetime of the air dryer cartridge. Such loads are especially guided and received by the supporting element or supporting elements.

Specifically, the two ends of the compression spring are reliably supported and guided by the outer cover element and the inner cover element. This improves stress distribution at contacts areas and prevents slippage or misalignment of the compression spring during operation. In addition, the integration of guiding features in the inner and outer cover elements (supporting elements) enhances the positioning, alignment and guidance of the compression spring, leading to improved functionality of the air dryer cartridge.

In particular, the cover assembly further comprises an inner cover element, wherein the inner cover element is configured for creating a direct interface (a contact surface) with the desiccant material within the container. For example, the air dryer cartridge, in particular the inner cover element, comprises a second supporting element configured for guiding (supporting) the compression spring. The second supporting element may be an integral part of the inner cover element or an additional retainer element provided (included) in the air dryer cartridge.

In particular, the first supporting element and the second supporting element, each are configured for supporting the positioning of the compression spring, preferably guiding and withstanding loads, such as strain, stress or tension, that are generated by the compression spring within the cover assembly.

In particular, the first supporting element and the second supporting element are configured for guiding and/or withstanding, e.g. tension, stress and/or strain generated (and acting on the inner and outer cover elements) by the compression spring.

In particular, any type of loads and forces, which can lead to stressing and/or deformation and/or displacement of the inner and outer cover elements due to the compression spring are more effectively guided and/or distributed.

In particular, the inner cover element and the outer cover element comprise complementary elements (mating elements) for interlocking the inner cover element and the outer cover element securely.

In particular, the outer cover element and the inner cover element are configured to be attached using fitting connections. For example, the fitting connections are provided through complementary fitting elements that are integrally formed in the outer cover element (e.g. a stepped-section) and in the inner cover elements (e.g. a protrusion element).

Advantageously, the fitting connections and form-fit designs improves alignment between mating components and eliminates the need for additional fasteners like screws or bolts. This, in turn, simplifies assembly processes. Additionally, many of these connections allow for relatively easy disassembly when necessary, facilitating maintenance or repairs.

In particular, the provision of form-fit connections distributes loads more evenly across mating surfaces, allowing the compression spring to transfer forces more effectively without localized stress concentrations.

In particular, the outer cover element comprises a first base and a first wall extending from the first base, wherein the first base comprises a first protrusion element formed on an inner surface of the first base, wherein the first protrusion element is configured for guiding (a first end of) the compression spring.

In particular, the first protrusion element (projecting element) is positioned at a first distance from a centre of the inner surface.

In particular, the outer cover element, in particular a first wall of the outer cover element comprises at least one attachment element (a surface for connection) that is configured to be attached to the container using at least one material connection, especially at least one ultrasonic welding connection.

In particular, the first protrusion element is configured to be positioned (arranged) in a centre hole of the compression spring (a helical coil) of the cover assembly.

In particular, the first protrusion element is further configured to interface with (engage with) the inner cover element, creating a contact surface.

Contact surfaces ensures proper contact between mating components minimizes friction and wear, thereby extending the service life of the assembly. Additionally, contact surfaces contribute to the assembly's rigidity and stiffness, enhancing its resistance to deformation under load.

In particular, the first base further comprises a second protrusion element formed on the inner surface of the first base, wherein the second protrusion element is configured to engage with the inner cover element.

In particular, the second protrusion element is positioned at a second distance from the first protrusion element, the second distance being greater than the first distance.

In particular, the first protrusion element and the second protrusion element are configured for forming (creating) the first supporting element, for example, in the form of a grooved area positioned between the first and second protrusion elements for retaining the compression spring within the cover assembly.

In particular, the first base of the outer cover element further comprises a plurality of (projecting) ribs formed on the inner surface of the first base, wherein the plurality of ribs is configured for interlocking with complementary elements of the inner cover element in particular the plurality of ribs extends in a radial pattern (radial configuration) from a second protrusion element or the second protrusion element.

In particular, the inner cover element comprises a second base and a second wall extending from the second base, wherein the second base comprise a desiccator side that is in contact with the desiccator material, and a spring side that is in contact with the compression spring, and wherein the spring side comprises the second supporting element (e.g. a receiving member) that is configured to accommodate the compression spring.

In particular, the second supporting element comprises a concave element centrally formed on the second base.

In particular, the second supporting element (the receiving member) further comprises a columnar element projecting from the concave element.

In particular, the receiving member further comprises a supporting member formed on at the apex of columnar element. The supporting member is configured to engage (come in contact) with the outer cover element.

In particular, the second base of the inner cover element further comprises a plurality of channels formed on the spring side of the inner cover element, wherein the plurality of channels configured for interlocking with complementary elements of the outer cover element. This ensures the secure connection between the inner and outer cover elements.

In particular, the plurality of channels extends in a radial pattern (radial configuration) forms the second supporting element.

In particular, the outer cover element, e.g. a first base, and the inner cover element, e.g. the second base, comprise openings (orifices or slits or cuts-out).

In particular, the air dryer cartridge further comprises a housing or an enclosure lid for enclosing (or covering) the container in an attached state. The enclosure lid helps shield the interior components of the air dryer cartridge, e.g. the container and the cover assembly, from external elements such as dust, moisture, and physical damage.

For example, the housing defines a chamber for enclosing the container and is configured to be connected to the container in a removable manner.

In particular, the air dryer cartridge further comprises a carrier element for connection to the air treatment device, wherein the carrier element is configured to be connected to the container, in particular, to a lower portion (bottom) of the container.

All of the advantages and technical effects being described in the context of the air dryer cartridge can also be applied for, individually or commonly, the air treatment device according to the present invention.

Further details and advantages of the present invention are explained and described in more detail in the context of the embodiment as illustrated by the enclosed figures.

It is schematically shown:
- Fig. 1: a cross-sectional representation of an air dryer cartridge according to one embodiment of the present invention;
- Fig. 2: a perspective view of an outer cover element of a cover assembly of the air dryer cartridge according to the present invention;
- Fig. 3: a perspective view of an inner cover element of a cover assembly of the air dryer cartridge according to the present invention;
- Fig. 4: a cross-sectional representation of an air dryer cartridge according to another embodiment of the present invention; and
- Fig. 5: an exploded view of an air dryer cartridge according to the present invention.

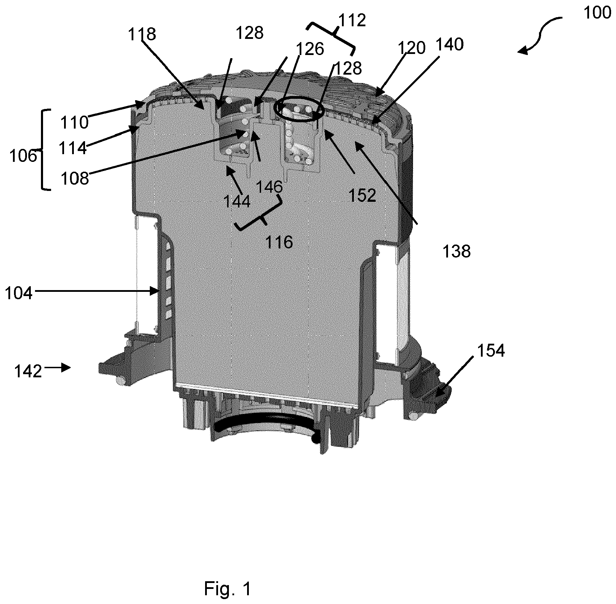

In **Fig. 1** a cross-sectional view of an embodiment of an air dryer cartridge 100 for an air treatment device of a vehicle is illustrated.

The air dryer cartridge 100 comprises a container 104 that is configured to be securely attached to, respectively detached from, the air treatment device.

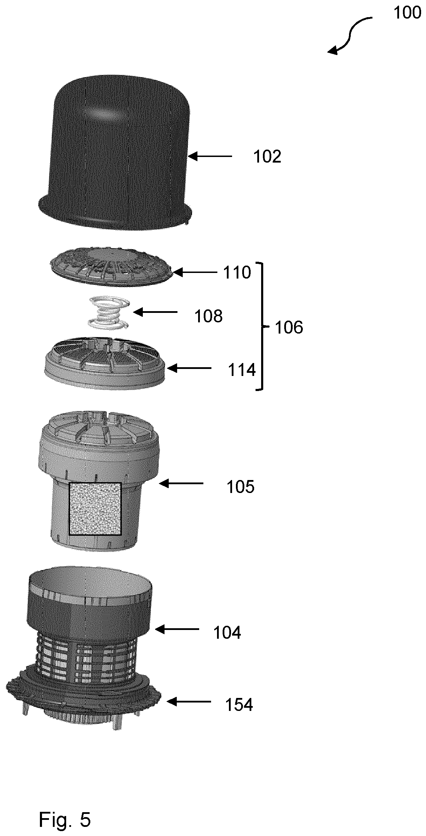

The container 104 is configured for accommodating desiccant material 105 (shown in Fig. 5).

The air dyer cartridge 100 further comprises a cover assembly 106 that is configured for covering the container 104 to form a closed container.

The cover assembly 106 is further configured to apply a predetermined tension (or compressive force) on the desiccant material within the container 104, ensuring a stable and consistent pressure on the desiccant material despite wear and volume loss over time.

The cover assembly 106 comprises an outer cover element 110 (e.g. a spring cover), an inner cover element 114 (e.g. a container cover or a desiccant cover) and a compression spring 108 disposed between the outer cover element 110 and the inner cover element 114.

The outer cover element 110 at one side (outer side) is exposed to the exterior of the air dryer cartridge while the inner cover element 114 in enclosed within the cartridge.

The outer cover element 114 is configured to be securely attached to the container 104 using at least one material connection, especially at least one ultrasonic welding connection.

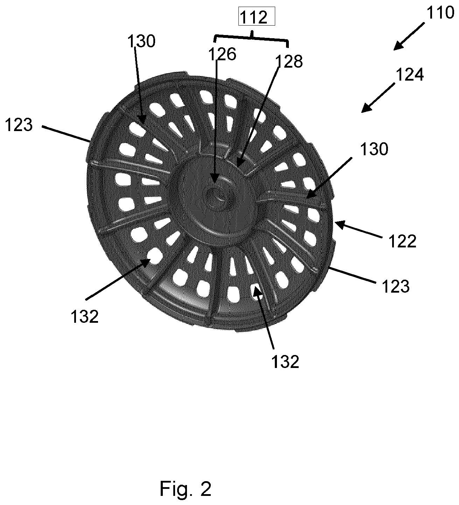

For example, the first wall 122 (visible Fig. 2) of the outer cover element is configured to be connected to the container 104 around its periphery. In particular, the first wall comprises at least attachment element 123 (e.g. a plurality of attachment surfaces) that is configured to provide a surface for material connection.

The air dryer cartridge 100 may further comprise a housing 102 (or an outer casing or an enclosure lid) (shown in Fig. 5) for enclosing (or covering) the container 104 of the air dryer cartridge in an attached (connected) state.

The housing 102 comprises (defines) a chamber for enclosing (covering) the cover assembly 104 and the container in the attached state.

The compression spring 108 is configured to be engaged with the inner and outer cover elements 114, 110 in the cover assembly 106, e.g. an assembled state.

For example, the outer cover element 110 comprises a first supporting element 112 that is configured to support (and/or guide) the positioning of the compression spring 108 within the cover assembly 106. For example, the first supporting element, comprises a grooved surface, integrally defined in the outer cover element 110.

The first supporting element is further configured to withstand and distribute the mechanical loads, such as, stress or strain or tension, generated by the compression spring 108 within the cover assembly 106.

The container 104 further comprises a carrier element 154 that is configured for attachment to the air treatment device (not shown).

For example, the carrier element 154 is configured to be connected to the container 104 at a lower portion 142 (bottom) of the container 104, e.g. through bayonet connections.

The outer cover element 110 is configured for secure attachment to the container 104. In this way a secure and fully assembled cartridge is achieved while the risk of any creeping, deformation, or breakage of the air dryer cartridge 100 prior to installation has been mitigated. Further, this feature provides for a robust attachment of the cover assembly to the container without requiring further delicate and fragile connections to other part of the cartridge, for example, to the carrier element 154. This, in turn, leads to safe transportation, handling and storage of the air dryer cartridge 100 and reduces the provision of additional fastening means, such as plastic bands.

The inner cover element 114 is configured for creating a direct interface with the desiccant material within the container 104, i.e. it is in contact with the desiccant material.

The inner cover element 114 (e.g. the desiccant cover) comprises a second supporting element 116 that is configured for supporting the positioning of the compression spring 108.

For example, similar to the first supporting element 112, the second supporting element 116 is further configured for guiding (and/or withstanding) any loads, strain, tension or stress generated by the compression spring 108 in the cover assembly 106.

Advantageously, the first and second support elements provide an improved positioning of the compression spring and better distribution of the mechanical loads generated by the compression spring and acting on the inner and outer cover elements.

In particular, the inner cover element 114 and the outer cover element 110, each comprises complementary elements (e.g. mating elements 128, 152) for secure interlocking attachment of the inner cover element and the outer cover element 110.

For example, the outer cover element 110 and the inner cover element 114 are configured to be attached using fitting connections 118 (e.g. form-fitted design, mating connection), facilitating secure and precise alignment during assembly of the cover assembly 106.

The form-fitted design of the cover assembly 106 ensures a secure fit around the spring 108, preventing the compression spring 108 from shifting or dislodging during operation. This helps maintain the integrity of the spring-loaded mechanism and ensures consistent performance over time.

Fitting connections 118 comprise, for example, press fit connections, interlocking tabs or grooves, snap-fit connections, press fit connections or bayonet mounts.

The outer cover element 110 (e.g. spring cover) comprises a first base 120 and a first wall 122 circumferentially extending from the first base 120. The first wall comprises an attachment element 123, a surface for connection to other components of the cartridge, e.g. to the container.

The inner cover element 114 comprises a desiccator side 138 which is in contact with the desiccator material and a spring side 140 which is in contact with the compression spring 108.

**Fig. 2** illustrates the outer cover element 110 of the cover assembly 106 of the air dryer cartridge 100 according to the present invention (as shown in Fig. 1).

The first base 120 comprises a first protrusion element 126 formed on an inner surface 124 of the first base 120 (e.g. the surface enclosed in the cover assembly).

The first protrusion element 126 configured for guiding a first end of the compression spring 108.

The first protrusion element 126 is positioned (integrally formed or extending outwardly from the inner surface 124) at a first distance from a centre of the inner surface 124.

The first protrusion element 126 may have the shape of a circular ridge, a semi-circular ridge, or a plurality of arc-shaped ridges formed around the centre of the inner surface 124 of the first base 120.

The first protrusion element 126 is configured to be positioned (arranged) in a centre hole of the compression spring 108 (a helical coil) in an assembled state of the cover assembly 106 as illustrated in Fig. 1.

The first protrusion element 126 advantageously supports the positioning of the compression spring 108 in the cover assembly 106. This helps to improve guiding and aligning the spring 108 during compression.

The first protrusion element 126 is further configured for engaging (contacting) with the inner cover element 114, enhancing stability and alignment within the assembly.

In particular, the first base 120 further comprises a second protrusion element 128 that is formed on the inner surface 124 of the first base 120.

For example, a further circular or semi-circular ridge that positioned at a second distance with the first protrusion element, e.g. surrounding the first (smaller) circular ridge. The second distance is greater than the first distance.

Similarly, the second protrusion element 128 is configured to create a contact surface (an interface) with the inner cover element 114 in the assembled state as shown in Fig. 1.

The first protrusion element 126 and the second protrusion element 128 are configured to create together a first supporting element 112, e.g. in the form of a grooved area or channel, that is arranged (defined) between the first and second protrusion elements 126, 128 for retaining (and supporting the positioning of) the compression spring 108 within the cover assembly 106 (see Fig. 1).

The first base 120 of the outer cover element 110 further comprises a plurality of ribs 130 formed on the inner surface 124 of the first base 120 (projecting from the inner surface 124).

The plurality of ribs 130 configured for interlocking with complementary elements of the inner cover element 114.

In particular, the plurality of ribs 130 extends in a radial pattern from the second protrusion element, e.g. disposed in a radial configuration or symmetrical arrangement around the centre of the first base.

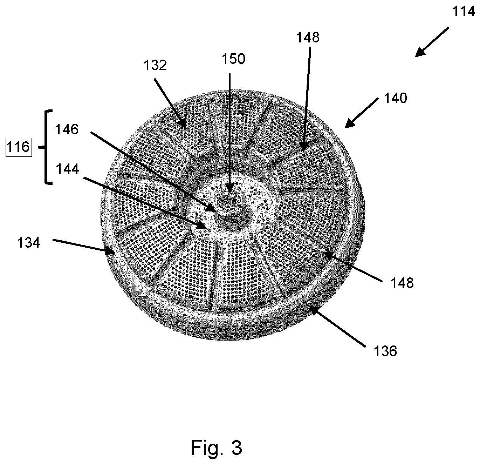

In **Fig. 3** a perspective view of an inner cover element 114 of the cover assembly 106 of the air dryer cartridge 100 according to the present invention is illustrated.

The inner cover element 114 comprises a second base 134 and a second wall 136 extending from the second base 134.

The spring side 140 of the inner cover element 114 comprises a second supporting element 116, e.g. a central receiving member for accommodating (retaining) the compression spring 108.

For example, the second supporting element 116 comprises a concave element (a cup-shape element or a receiving chamber) that is integrally formed on the second base 134, i.e. near to the centre of the second base. The concave element 144 is formed on the desiccator side

The receiving member comprises a columnar element 146 (a pin element) centrally projecting from the concave element 144. The pin-like element is integrally formed at the centre of the concave element 144.

At the apex (upper most position) of the pin-like element a supporting member 150 is provided (e.g. integrally formed at the apex of the columnar element 146. The supporting member 150 is configured to create a further contact interface with the centre of the first base 120 of the outer cover element 110.

The fitting connections 118 between the outer and inner cover elements are created by the specific design (and dimensions) of the concave element of the second supporting element 116 and the second protrusion element 128 of the outer cover element 110.

For example, the concave element 144 comprises a stepped-section 152 defining a contact surface for contacting or engaging with the second protrusion element 128 of the outer cover element 110. That is, the outer and inner cover elements comprise mating members for precise and reliable attachments of these two elements.

The second base 134 of the inner cover element 114 further comprises a plurality of channels 148 formed on the spring side 140 of the inner cover element 114.

The plurality of channels 148 configured for interlocking with complementary elements of the outer cover element 110.

For example, the plurality of channels 148 extends in a radial pattern (radial and symmetrical configuration) from the second supporting element 116 (the receiving member).

The plurality of channels 148 that are integrally formed on the desiccator cover element 114 (the inner cover element) and the plurality of ribs 130that are integrally formed on the spring cover element 110 (the outer cover element) together create secure and compact form-fit connections.

The outer cover element 110, e.g. a first base 120, and the inner cover element, e.g. the second base, each comprises openings 132. For example, the size of the openings on the inner cover element is smaller than the size of the openings on the outer cover element 110. In other words, the total number of openings on the inner cover element is greater than the inner cover element.

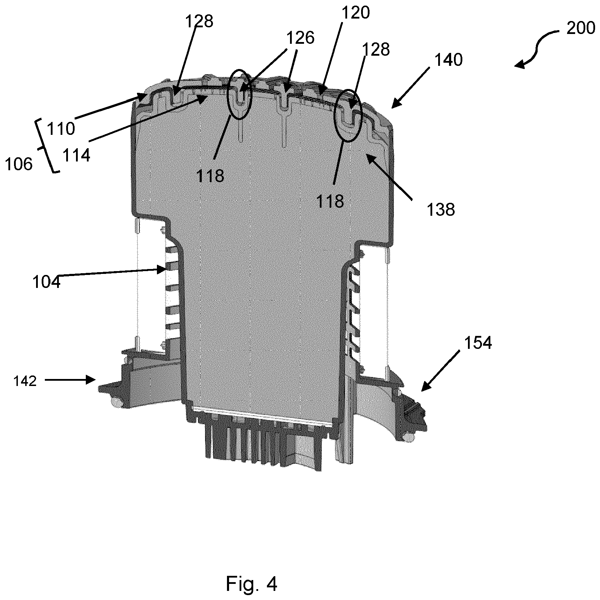

In **Fig. 4** another example of an air dryer cartridge 200 for the air treatment device according to the present invention is illustrated. In this Figure an offset cross-sectional view (i.e. not through the centre of the air dryer cartridge, is illustrated.

The air dryer cartridge 200 as shown in Fig. 4 comprises the cover assembly 106 and the container 104.

The cover assembly 106 comprises the compression spring (not visible) that is disposed between the outer cover element 110 and the inner cover element 114.

The inner surface 124 of the outer cover element 110 comprises the first protrusion element 126 spaced apart from the second protrusion element 128.

The first and second protrusion elements, for example, are in the form of circular ridges (e.g. ring-shaped elevations) extending outward from the inner surface 124 of the first base 120.

In this example, the second protrusion element 128 is closer to the first wall 122, e.g. it is positioned at a third distance from the centre of the first base, which third distance being larger than the second distance shown in Fig. 1.

Similar to the embodiment shown in Fig. 1, the outer cover element 110 and the inner cover element 114 are configured for attachment using fitting connections 118.

In particular, the first and second protrusion elements provide for crest areas that are configured to mate corresponding complementary elements, e.g. recessed elements or depression elements, formed on the spring side of the second base of the inner cover elements.

Advantageously, such precise interlocking through form-fit connections helps to stabilize the compression spring within the cover assembly, reducing the likelihood of movement or shifting during operation.

In **Fig. 5** a schematic, exploded view of an air dryer cartridge is depicted.

The air dryer cartridge 100 comprises the container 104 and the cover assembly 106.

The cover assembly 106 comprises the outer cover element 110, the inner cover element 114 and the spring 108 disposed between the inner cover element 114 and outer cover element 110.

The desiccant material 105 is disposed within (included in) the container 104. In particular, the cover assembly 106 is configured to cover the container and apply a tension/force, to the material within the container 104, in particular the spring 108 that is supported by the inner cover element 114 and the outer cover element 110.

The container 104 is further configured to be connected to an air treatment device. For example, the carrier element 154 is attached to the container 104 to facilitate mounting onto the air treatment device.

The air dryer cartridge further comprises the outer casing 102 that is configured to enclose (to cover) the container and the cover assembly in the assembled state.

### Reference signs

- 100, 200: Air dryer cartridge
- 102: Housing
- 104: Container
- 105: Desiccant material
- 106: Cover assembly
- 108: Compression spring
- 110: Outer cover element
- 112: First supporting element
- 114: Inner cover element
- 116: Second supporting element
- 118: Fitting connections
- 120: First base
- 122: First wall
- 123: Attachment element
- 124: Inner surface
- 126: First protrusion element
- 128: Second protrusion element
- 130: Plurality of ribs
- 132: Openings
- 134: Second base
- 136: Second wall
- 138: Desiccator side
- 140: Spring side
- 142: Lower portion of the container
- 144: Concave element
- 146: Columnar element
- 148: Plurality of channels
- 150: Supporting member
- 152: Stepped-section
- 154: Carrier element

## Claims

1. An air dryer cartridge (100) for an air treatment device of a vehicle, especially a utility vehicle,
wherein the air dryer cartridge (100) comprises a container (104) and a cover assembly (106), wherein the container (104) is configured to be mounted onto the air treatment device and includes a desiccant material (105), wherein the cover assembly (106) is configured to cover the container (104) and apply a tension to the desiccant material within the container (104), wherein the cover assembly (106) comprises a compression spring (108) and an outer cover element (110), wherein the outer cover element (110) is configured for secure attachment to the container, wherein the air dryer cartridge (100), in particular the outer cover element (110), further comprises a first supporting element (112) configured for guiding and/or supporting the compression spring (108).

2. The air dryer cartridge (100) according to claim 1,
**characterized in that**
the cover assembly (106) further comprises an inner cover element (114), wherein the inner cover element is configured for creating a direct interface with the desiccant material (105) within the container (104), wherein the air dryer cartridge (100), in particular the inner cover element (114), further comprises a second supporting element (116) configured for guiding the compression spring (108).

3. The air dryer cartridge (100) according to claim 2,
**characterized in that**
the inner cover element (114) and the outer cover element (110) comprise complementary elements for interlocking the inner cover element and the outer cover element securely, in particular the outer cover element (110) and the inner cover element (114) are configured to be attached using fitting connections (118).

4. The air dryer cartridge (100) according to any one the preceding claims,
**characterized in that**
the outer cover element (110) comprises a first base (120) and a first wall (122) extending from the first base, wherein the first base (120) comprises a first protrusion element (126) formed on an inner surface (124) of the first base, wherein the first protrusion element (126) is configured for guiding the compression spring (108), in particular the first protrusion element (126) is configured to be positioned at a first distance from a centre of the inner surface (124).

5. The air dryer cartridge (100) according to claim 4,
**characterized in that**
the first protrusion element (126) is configured to be positioned in a centre hole of the compression spring of the cover assembly (106), and/or
the first wall (122) of the outer cover element (110) is configured to be attached to the container (104) using at least one material connection, especially at least one ultrasonic welding connection.

6. The air dryer cartridge (100) according to claims 4 or 5,
**characterized in that**
the first protrusion element (126) is further configured to engage with the inner cover element (114), in particular with a columnar element (146) formed in the inner cover element (114).

7. The air dryer cartridge (100) according to any one of claims 4 to 6,
**characterized in that**
the first base (120) further comprises a second protrusion element (128) formed on the inner surface (124) of the first base (120), wherein the second protrusion element (128) is configured to engage with the inner cover element (114), in particular the second protrusion element (128) is positioned at a second distance from the first protrusion element (126), the second distance being greater than the first distance.

8. The air dryer cartridge (100) according to claim 7,
**characterized in that**
the first protrusion element (126) and the second protrusion element (128) are configured for forming the first supporting element (112), in particular a grooved area positioned between the first and second protrusion elements for retaining the compression spring (108) within the cover assembly (106).

9. The air dryer cartridge (100) according to any one of claims 4 to 8,
**characterized in that**
the first base (120) of the outer cover element (110) further comprises a plurality of ribs (130) formed on the inner surface of the first base, wherein the plurality of ribs (130) is configured for interlocking with complementary elements of the inner cover element (114), in particular the plurality of ribs extends in a radial pattern from a second protrusion element or the second protrusion element.

10. The air dryer cartridge (100) according to any one of claims 2 to 9,
**characterized in that**
the inner cover element (114) comprises a second base (134) and a second wall (136) extending from the second base, wherein the second base (134) comprise a desiccator side (138) being in contact with the desiccator material, and a spring side (140) being in contact with the compression spring (108), and wherein the spring side (138) comprises the second supporting element (116) configured to accommodate the compression spring (108).

11. The air dryer cartridge (100) according to claim 10,
**characterized in that**
the second supporting element (116) comprises a concave element (144) centrally formed on the second base (134), in particular the concave element (144) comprises a stepped-section (152) for engaging with the second protrusion element (128) of the outer cover element (110), and/or
the second supporting element (116) comprises a columnar element (146) projecting from a concave element (144), in particular the second supporting element (116) further comprises a supporting member (150) formed on the columnar element (146).

12. The air dryer cartridge (100) according to any one of claims 10 or 11,
**characterized in that**
the second base (134) of the inner cover element (114) further comprises a plurality of channels (148) formed on the spring side (140) of the inner cover element (114), wherein the plurality of channels (148) configured for interlocking with complementary elements of the outer cover element (110), in particular the plurality of channels (148) are configured to extend in a radial pattern from the second supporting element (116).

13. The air dryer cartridge (100) according to any one of claims 2 to 12,
**characterized in that**
the outer cover element (110), in particular a first base, and the inner cover element (114), in particular a second base, comprise openings (132).

14. The air dryer cartridge (100) according to any one of the preceding claims,
**characterized in that**
the air dryer cartridge (100) further comprises a carrier element (154) for connection to the air treatment device, wherein the carrier element (154) is configured to be connected to the container (104), in particular, to a lower portion of the container (104), and/or the air dryer cartridge (100) further comprises a housing (102) for enclosing the container (104).

15. An air treatment device for a vehicle, especially a utility vehicle, comprising an air dryer cartridge (100, 200) according to one of the preceding claims.
